# FASCICULE DE BREVET EUROPEEN

(11) **EP 3 752 384 B1**
(45) Date de publication et mention de la délivrance du brevet: **16.09.2026**
(21) Numéro de dépôt: 19711957.1
(22) Date de dépôt: 12.02.2019
(51) Int. Cl.: B60L 5/20

(54) **BANDE DE FROTTEMENT D'UN PANTOGRAPHE, VÉHICULE FERROVIAIRE ET PROCÉDÉ DE SURVEILLANCE CORRESPONDANTS**
KONTAKTLEISTE EINES STROMABNEHMERS UND ENTSPRECHENDES SCHIENENFAHRZEUG UND ÜBERWACHUNGSVERFAHREN
CONTACT STRIP OF A PANTOGRAPH, AND CORRESPONDING RAIL VEHICLE AND MONITORING METHOD

(30) Priorité: 15.02.2018 FR 1851284
(43) Date de publication de la demande: 23.12.2020
(73) Titulaire: Faiveley Transport Tours, 37701 Saint Pierre des Corps Cedex (FR)
(72) Inventeur: LAMIDE, Fabrice, 37270 Montlouis sur Loire (FR)
(74) Mandataire: IXAS Conseil
(86) Numéro de dépôt international: PCT/FR2019/050296
(87) Numéro de publication internationale: WO 2019/158846

(56) Documents cités:
- EP-A1- 0 525 595
- EP-A2- 0 384 972
- WO-A1-2004/020241
- WO-A1-2017/001799
- DE-U1- 8 803 377
- GB-A- 1 374 972
- JP-A- S59 204 401

## Description

### Domaine technique de l'invention

L'invention concerne le domaine de l'électrotechnique pour application ferroviaire et, plus particulièrement, celui des pantographes. Plus précisément, elle concerne une bande de frottement pour pantographes, utilisée pour transférer l'énergie électrique entre un moyen fixe de distribution d'énergie, tel qu'une caténaire, et un appareil mobile consommateur d'énergie électrique, tel qu'un engin de traction de train, de métro, de tramway, qui est muni d'une telle bande de frottement. Cette bande de frottement comprend un dispositif de détection d'usure.

### Etat de la technique

Pour un véhicule ferroviaire muni d'un moteur de traction électrique, les pantographes assurent le contact électrique entre l'unité de traction (par exemple la locomotive) et la caténaire. Plus précisément, le pantographe comprend une pièce de frottement qui entre en contact mécanique frottant avec la caténaire. La pièce de frottement est une bande disposée horizontalement et sensiblement perpendiculaire à la caténaire. Cette pièce appelée aussi « bande de frottement » comprend une bande d'usure fixée sur un étrier ; la bande d'usure est un conducteur électrique qui collecte et transmet le courant électrique de la caténaire au pantographe pour alimenter le système de traction électrique, par l'intermédiaire de l'étrier, un support métallique qui sert comme embase pour la bande d'usure.

Afin d'assurer un contact électrique stable, le pantographe exerce contre la caténaire une force de pression. Cette force n'est pas constante mais peut dépendre, d'une part, du développement du pantographe (qui dépend de la hauteur de la caténaire par rapport à la voie ferroviaire), et, d'autre part, des effets aérodynamiques, ces derniers étant fonction du développement du pantographe, de la vitesse d'avancement du véhicule ferroviaire, et de la vitesse et direction du vent.

La bande d'usure est réalisée en un matériau conducteur électrique moins dur que la caténaire, afin d'éviter l'usure précoce de la caténaire ; ce matériau est typiquement un mélange à forte contenance de carbone. C'est donc la bande d'usure qui s'use de manière prépondérante : la bande de frottement est une pièce consommable qu'il faut remplacer régulièrement, sachant qu'il n'est normalement pas prévu de remplacer uniquement la bande d'usure. En cas de rupture de la bande d'usure, le contact électrique entre la caténaire et le pantographe peut s'interrompre : cela perturbe l'alimentation électrique du train, pouvant conduire à l'arrêt du train en rase campagne. La rupture de la bande d'usure peut conduire à la montée incontrôlée du pantographe, qui continuera à exercer une force contre la caténaire pendant l'avancement du train : ainsi la rupture de la bande d'usure peut provoquer l'endommagement de la caténaire par le pantographe ou un arrachement de la tête du pantographe. Cela représente un incident lourd qui nécessite l'intervention d'une équipe de techniciens sur le lieu, avec interruption de la circulation ferroviaire pendant plusieurs heures, voire plusieurs jours.

L'usure de la bande d'usure n'est pas une simple fonction du nombre de kilomètres parcourus par le train : l'usure dépend de la force de pression de la bande de frottement contre la caténaire, de la vitesse du train, de la vitesse et direction du vent, des conditions météorologiques (pluie, neige givre, température), des arcs électriques qui peuvent se produire au cours du contact frottant entre la bande et la caténaire. Par ailleurs, une température excessive non seulement accélère l'usure de la bande, mais encore favorise le décollement de la zone de transition entre la bande d'usure et son substrat métallique (étrier).

Il existe des systèmes qui visent à détecter l'usure de la bande d'usure, pour permettre de la remplacer avant sa rupture. Typiquement cette détection doit se situer à un stade suffisamment précoce pour permettre au véhicule ferroviaire d'atteindre sa gare de destination, où le service technique peut ensuite procéder au remplacement de la bande de frottement. Même dans le cas où cet objectif n'est pas atteint, il serait déjà désirable que le dispositif de détection puisse empêcher le pantographe de monter en cas de rupture de la bande d'usure, pour éviter l'endommagement de la caténaire par le pantographe. Ces systèmes de détection sont de différentes natures.

De nombreux documents décrivent des systèmes dans lesquels la bande de frottement comprend une enceinte longitudinale étanche contenant un fluide, de sorte qu'en cas d'usure au-delà d'une certaine valeur, ou en cas de rupture de la bande d'usure, il y a perte d'étanchéité de ladite enceinte, entraînant la fuite ou un changement de pression dudit fluide. Cet évènement peut être détecté pour déclencher le retrait du pantographe. Dans les brevets anglais GB 1 374 972 et GB 2 107 662 (Morganite Carbon) ladite enceinte est un tube en matériau plastique ou caoutchouc pouvant résister à la température de fonctionnement qui peut atteindre 80 °C. Dans FR 2 663 592 (Le Carbone Lorraine) l'enceinte est un tube en matériau carboné présentant les mêmes caractéristiques mécaniques que la bande d'usure. Dans US 5,189,903 (Hoffmann & Co), EP 0 402 666 A1 (Ringsdorff-Werke), et dans EP 0 384 972 A2 (Schunk Bahntechnik) l'enceinte est formée au moins en partie par les parois d'une rainure aménagée dans la partie inférieure de la bande de frottement. EP 0 872 374 A1 (Le Carbone-Lorraine) propose d'utiliser un tube étanche en aluminium ou cuivre, d'une dureté inférieure à 4 sur l'échelle de Mohs. Un autre dispositif utilisant un tube en laiton entaillé est décrit dans WO 2014/102508 (Mersen France Amiens).

Ces dispositifs présentent certains inconvénients. Ils doivent être reliés à un circuit de fluide, par exemple d'air comprimé, ce qui alourdit à la fois le dispositif et sa maintenance. Ils ne permettent qu'un seul niveau de détection (intégrité de l'enceinte ou fuite de fluide), ce qui ne permet une maintenance prévisionnelle que lorsque le seuil d'usure de la bande de frottement qui déclenche la perte de fluide a été effectivement atteint.

Le principal inconvénient de ces systèmes automatiques d'abaissement d'urgence (connus sous le signe ADD = Automatic Drop Device) qui mettent en œuvre la détection pneumatique associée à un système de rétractation automatique est qu'ils entrainent une descente automatique du bras du pantographe afin d'éviter des dommages importants du matériel roulant et/ou de l'infrastructure; cela perturbe l'alimentation du véhicule ferroviaire et impacte la disponibilité du train.

EP 0 525 595 A1 (Siemens AG) décrit une bande de frottement dans laquelle ont été noyées des fibres optiques à des profondeurs différentes. Au fur et à mesure que l'épaisseur de la bande d'usure diminue par l'usure, les fibres optiques sont endommagées. Par des moyens optiques on peut ainsi en déduire autant de niveaux d'usure de la bande de frottement qu'il y a de fibres optiques à des profondeurs différentes. Cela donne une certaine idée de l'épaisseur de bande de frottement restante, mais cette solution est techniquement assez compliquée, à la fois pour la fabrication de la bande de frottement et pour le système de détection optique. WO 2006/065 985 (Pantrac GmbH) propose de percer des trous borgnes sur la partie inférieure de la bande d'usure ; l'usure de ces trous peut être relevée par une fibre optique noyée dans le trou. L'utilisation de trous d'une profondeur différente peut permettre de détecter plusieurs niveaux d'usure, mais ce dispositif optique est complexe et ne permet une surveillance que dans des zones discrètes de la bande.

On citera en outre WO 2005/044614, qui décrit l'utilisation de fibres dans l'étrier de la bande de frottement, de manière à déterminer la pression exercée par la caténaire sur la tête du pantographe. Ce dispositif est couplé à une géolocalisation, afin de donner une image représentative de l'état du réseau, en particulier du réglage de la tension de la caténaire. Cette solution n'est cependant pas économiquement viable, ce qui rend délicate son utilisation en service commercial. Enfin JPH08107603 (A) décrit une solution très rudimentaire, dans laquelle on donne une forme particulière au pantographe, de manière à permettre une observation du niveau d'usure de la bande. Ce système ne permet pas de surveiller la bande en mode dynamique, à savoir en service normal du véhicule. En pratique, l'enseignement de ces deux derniers documents ne permet donc pas de remédier aux problèmes présentés ci-dessus. Un autre pantographe à détection de l'état d'usure de la bande de frottement par un fil électrique est connu DE8803377U1.

D'une manière générale, le pantographe d'un engin de traction ferroviaire, et surtout dans le cas d'un train à grande vitesse, représente un environnement très perturbé sur le plan mécanique (vitesse, vent, vibration, gel), thermique (températures d'été et d'hiver, température augmentée du fait du frottement) électrique (haute tension, fort courant, arc électrique, humidité, neige) et électronique (champ électromagnétiques, machines électriques tournantes, transformateurs, rupteurs). Il ne s'agit donc pas d'un environnement propice pour installer des dispositifs métrologiques de précision. Par ailleurs, il ne s'agit pas d'un environnement spécialement accessible pour la maintenance. Dans ces conditions, toute intervention humaine sur le pantographe doit suivre des procédures rigoureuses pour ne pas mettre en danger le personnel. Par conséquent, le respect de ces procédures rallonge la durée de l'intervention.

Compte tenu de ce qui précède, un objectif de la présente invention est de remédier, au moins partiellement, aux inconvénients de l'art antérieur évoqués ci-dessus.

Un autre objectif de l'invention est de proposer une bande de frottement, dont le degré d'usure peut être surveillé de façon continue et en temps réel sans impacter la disponibilité de l'équipement.

Un autre objectif de l'invention est de proposer une telle bande de frottement qui possède un coût de fabrication comparable à celui des solutions de l'état de la technique, tout en apportant de nouvelles fonctionnalités.

Un autre objectif de l'invention est de proposer une telle bande de frottement qui peut être installée de manière aisée sur les pantographes existants, tout comme sur les nouveaux pantographes.

Un autre objectif de l'invention est de proposer une telle bande de frottement qui s'accompagne d'un faible impact, en termes de masse et de traînée aérodynamique en tête de pantographe.

### Objets de l'invention

Selon l'invention, au moins un des objectifs ci-dessus est atteint au moyen d'une bande de frottement pour un pantographe d'un véhicule, notamment d'un véhicule ferroviaire, ladite bande de frottement comprenant des moyens de fixation sur ledit pantographe, notamment un étrier, ainsi qu'une bande d'usure destinée à entrer en contact avec une caténaire, cette bande d'usure étant réalisée un premier matériau électriquement conducteur, ladite bande de frottement comprenant en outre un conduit, dit de détection pneumatique, adapté pour contenir un fluide sous pression, et des moyens de liaison aptes à relier ce conduit de détection pneumatique à un circuit de détection pneumatique,
caractérisée en ce que ladite bande de frottement comprend en outre
- au moins un élément électriquement conducteur, dit de détection électrique, réalisé en un deuxième matériau électriquement conducteur dont la conductivité électrique est supérieure à celle dudit premier matériau électriquement conducteur, cet élément électriquement conducteur étant interposé entre ledit conduit et la surface supérieure de la bande d'usure,
- des moyens de connexion dudit élément électriquement conducteur à un circuit de détection électrique, intégrant ledit élément électriquement conducteur.

Autres formes de réalisation de la bande de frottement conforme à l'invention peuvent en outre comprendre les caractéristiques suivantes :
a/ la surface supérieure dudit élément électriquement conducteur est située à une profondeur prédéterminée, par rapport à la surface supérieure de ladite bande d'usure, à l'état non usé de cette dernière, cette profondeur étant notamment voisine de 20 millimètres.
b/ à l'état non usé de ladite bande d'usure, la différence entre la profondeur de la surface supérieure dudit élément électriquement conducteur et la profondeur de la surface supérieure dudit conduit est voisine de 5 millimètres.
c/ ledit élément électriquement conducteur est allongé et s'étend transversalement à l'intérieur de la bande d'usure, en référence à la direction d'avancée du véhicule, ledit élément électriquement conducteur et ledit conduit étant de préférence mutuellement parallèles.
d/ la bande comprend en outre des moyens d'isolation électrique, permettant d'isoler ledit élément électriquement conducteur par rapport à la bande d'usure.
e/ ledit au moins un élément électriquement conducteur est fixé, notamment par collage, contre le fond d'une gorge de la bande d'usure.
f/ le support délimite une cavité ouverte vers le haut, et il est en outre prévu un insert, logé dans une gorge de la bande d'usure, ledit insert obturant l'ouverture de ladite cavité de manière à former ledit conduit.
g/ ledit insert maintient en position ledit au moins un élément électriquement conducteur contre le fond de ladite gorge.
h/ les moyens d'isolation électrique comprennent une enveloppe isolante dudit élément électriquement conducteur et/ou ledit insert, cet insert étant réalisé en un matériau isolant électrique, notamment en silicone.
i/ les moyens de connexion sont des moyens de connexion amovible, aptes à être branchés de manière amovible à un câblage de liaison dudit circuit de détection électrique.
j/ les moyens de connexion amovible comprennent deux connecteurs électriques, prévus aux deux extrémités longitudinales opposées dudit élément électriquement conducteur.
k/ les moyens de connexion amovible comprennent un unique connecteur électrique, ledit élément électriquement conducteur formant une boucle dont les deux extrémités coopèrent avec ledit connecteur électrique unique.
l/ la bande comporte au moins deux éléments électriquement conducteurs, un premier élément électriquement conducteur étant tourné vers la caténaire en fonctionnement normal du véhicule de manière à fournir un premier degré d'alerte, alors qu'au moins un autre élément électriquement conducteur est interposé entre ledit premier élément électriquement conducteur et ledit conduit, de manière à fournir au moins un autre degré d'alerte.

Ces caractéristiques additionnelles a/ à l/ peuvent être mises en œuvre avec l'objet principal ci-dessus, individuellement ou en combinaisons quelconques, techniquement compatibles.

L'invention a également pour objet un véhicule ferroviaire comprenant une caisse et un pantographe, ledit pantographe comportant un châssis monté sur ladite caisse dudit véhicule, une bande de frottement destinée à entrer en contact avec une caténaire et des moyens de liaison entre le châssis et la bande de frottement,
caractérisé en ce que la bande de frottement est telle que définie ci-dessus, et le véhicule comprend en outre
- un circuit de détection pneumatique intégrant ledit conduit de détection, ainsi que des moyens d'identification, propres à identifier une variation de pression dans ledit circuit pneumatique,
- au moins un circuit de détection électrique intégrant ledit au moins un élément électriquement conducteur, ainsi que des moyens de détection, propres à détecter la variation d'un paramètre représentatif dudit circuit de détection, tel que la coupure électrique dudit circuit de détection.

Selon d'autres caractéristiques additionnelles du véhicule ferroviaire conforme à l'invention :
a'/ ce véhicule comprend des moyens d'alerte aptes à être activés lorsque ladite variation se situe en dehors d'une plage prédéterminée de réponses, notamment en cas de coupure électrique dudit circuit de détection.
b'/ ce véhicule comprend en outre un module de contrôle/commande intégrant les moyens de détection et les moyens d'alerte, ce module étant apte à coopérer avec ledit circuit de détection électrique.
c'/ ledit module de contrôle/commande comprend des moyens de communication de type sans fil, propres à transmettre des informations en direction dudit véhicule ferroviaire et/ou du sol.
d'/ ledit module de contrôle/commande est fixé, notamment de manière amovible, sur la tête du pantographe.

Ces caractéristiques additionnelles a'/ à d'/ peuvent être mises en œuvre avec le second objet ci-dessus, individuellement ou en combinaisons quelconques, techniquement compatibles.

L'invention a également pour objet un procédé de surveillance de l'usure d'une bande de frottement telle que définie ci-dessus, montée sur un véhicule tel que défini ci-dessus, dans lequel :
- on détecte la variation d'un paramètre représentatif dudit circuit électrique de détection, tel que la coupure électrique dudit circuit de détection ;
- on en déduit la mise en contact de l'élément électriquement conducteur (5) avec la caténaire.

En outre ledit procédé comprend une étape selon laquelle on détermine un premier temps caractéristique (t1), correspondant à la mise en contact de l'élément électriquement conducteur avec la caténaire, on estime un second temps caractéristique (t2), correspondant à la mise en contact du conduit avec la caténaire, et on estime une durée de service dite de sécurité, correspondant à la différence (t2-t1) entre le second temps caractéristique et le premier temps caractéristique.

L'invention a enfin pour objet un procédé d'amélioration (ou « upgrading ») d'un véhicule ferroviaire comprenant une caisse et un pantographe,
ledit pantographe comportant un châssis monté sur ladite caisse dudit véhicule, au moins une bande de frottement dite originelle, destinée à entrer en contact avec une caténaire et des moyens de liaison entre le châssis et la bande de frottement,
ladite bande de frottement comprenant des moyens de fixation sur ledit pantographe, notamment un étrier, ainsi qu'une bande d'usure destinée à entrer en contact avec une caténaire cette bande d'usure étant réalisée un premier matériau électriquement conducteur, ladite bande de frottement comprenant en outre un conduit, dit de détection pneumatique, adapté pour contenir un fluide sous pression, et des moyens de liaison aptes à relier ce conduit de détection pneumatique à un circuit de détection pneumatique,
caractérisé en ce que
- on remplace ladite au moins une bande de frottement originelle par une bande de frottement conforme à l'une quelconque des revendications précédentes, dite bande de frottement de remplacement
- on équipe ledit véhicule avec au moins un circuit de détection électrique et avec des moyens de détection, propres à détecter la variation d'un paramètre représentatif dudit circuit de détection, tel que la coupure électrique dudit circuit de détection,
- on connecte ledit au moins un élément électriquement conducteur de ladite bande de frottement de remplacement avec ledit circuit de détection électrique.

### Figures

La figure 1 est une vue schématique de profil, illustrant un véhicule ferroviaire susceptible d'utiliser une bande de frottement selon l'invention.
La figure 2 est une vue de profil à plus grande échelle, illustrant un pantographe du véhicule ferroviaire de la figure 1, lequel est équipé de deux bandes de frottement selon l'invention.
La figure 3 est une vue en coupe transversale, illustrant de manière schématique une bande de frottement selon l'invention.
La figure 4 est une vue en coupe longitudinale, illustrant de manière schématique la bande de frottement de la figure 3.
La figure 5 illustre à plus grande échelle le détail V de la figure 2.
La figure 6 est une vue en coupe longitudinale, analogue à la figure 4, illustrant de manière schématique une bande de frottement conforme à une variante de réalisation de l'invention.

Les repères numériques suivants sont utilisés sur les figures :

| | | | |
|---|---|---|---|
| 300 | Véhicule | 1,1' | Bande de frottement |
| 302 | Voie ferrée | 3 | Bande d'usure |
| 304 | Caténaire | H3 | Hauteur initiale de 3 |
| 306 | Toit du véhicule 300 | 308 | Pantographe |
| 202 | Châssis du pantographe 308 | 5 | Elément conducteur |
| 204 | Cadre du châssis 202 | 2 | Support |
| 206 | Isolateurs électriques | 71,72 | Connecteurs |
| 208 | Archet | 21,22 | Rebords de 2 |
| 210 | Bras articulé | 23 | Cavité de 2 |
| 214 | Tige inférieure principale | W | Zone d'usure de 3 |
| 216 | Tige supérieure principale | 30 | Surface supérieure de 3 |
| 218 | Tige inférieure auxiliaire | 31 | Gorge de 3 |
| 222 | Dispositif de rappel | 32 | Adhésif |
| 224 | Dispositif de déploiement | 33 | Insert |
| 4 | Conduit | 41,42 | Extrémités de 4 |
| 43,44 | Buses de 4 | 40 | Surface supérieure de 4 |
| H4 | Altitude de 4 | 45 | Circuit pneumatique |
| 46 | Contrôleur pneumatique | 50 | Surface supérieure de 5 |
| H5 | Hauteur de 5 | 20 | Gaine |
| 8,8' | Circuits de détection | 81,81' | Câblage de liaison |
| 9 | Module contrôle/commande | 91 | Moyens de détection de 9 |
| 92 | Moyens d'alerte de 9 | 93 | Communication sans fil |
| L3 | Largeur de 3 | L33 | Largeur de 33 |
| 101 | Bande de frottement (figure 6) | 105 | Conducteur (figure 6) |
| 151 | Extrémité de 105 | 152 | Extrémité de 105 |
| 171 | Connecteur unique | 120 | Gaine unique |
| 309 | Tête du pantographe | | |

### Description

Dans la présente description les termes « conducteur » et « isolant » se réfèrent à la conduction électrique, sauf mention contraire.

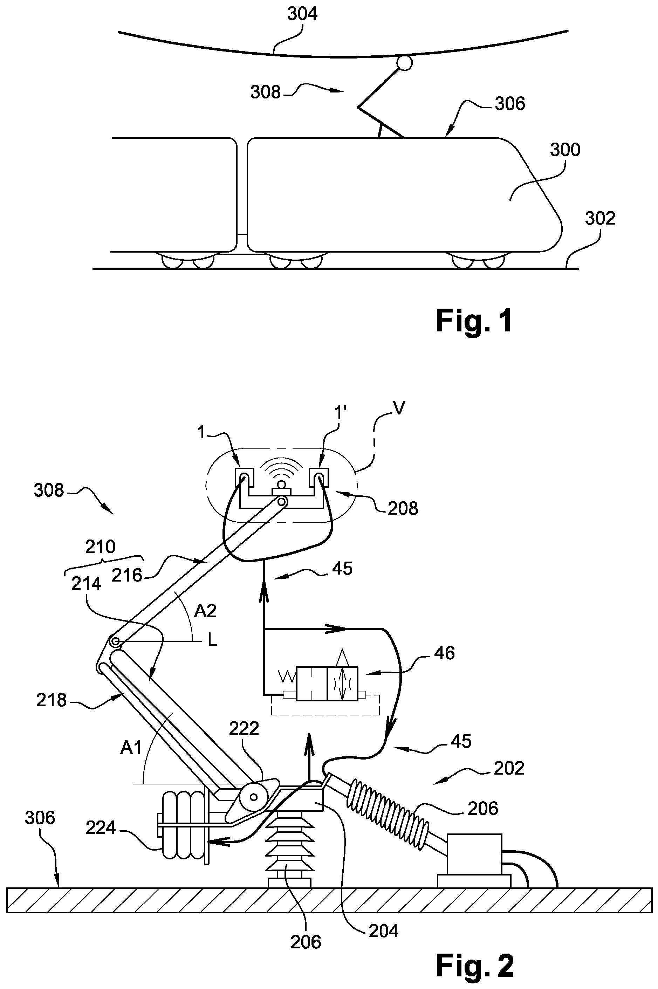

En référence à la figure 1, un véhicule ferroviaire **300** mettant en œuvre l'invention va à présent être décrit. Le véhicule ferroviaire **300** est conçu pour circuler sur une voie ferroviaire **302** au-dessus de laquelle s'étend une caténaire **304** dans laquelle passe un courant électrique d'alimentation. Le véhicule ferroviaire **300** comporte un toit **306** sur lequel est fixé un pantographe **308** conçu pour capter, de manière connue en soi, le courant électrique d'alimentation de la caténaire **304** et ainsi alimenter électriquement le véhicule ferroviaire **300.**

En référence notamment à la figure 2, le pantographe **308** va à présent être décrit plus en détail. Le pantographe **308** comporte un châssis **202** fixé au toit **306** du véhicule ferroviaire. Dans l'exemple décrit, le châssis **202** comporte un cadre **204** et des isolateurs électriques **206** reliant le cadre **204** au toit du véhicule ferroviaire. Le pantographe **308** comporte en outre un archet **208** destiné à être au contact de la caténaire **304** afin de capter le courant d'alimentation.

La caténaire est située verticalement à une distance du châssis **202** qui peut fortement varier. Pour pallier les variations de la distance entre la caténaire et le châssis **202,** le pantographe comporte en outre un bras articulé **210** reliant l'archet **208** au châssis **202,** de sorte que l'archet **208** se trouve à une distance variable par rapport au châssis **202.** Le bras articulé **210** est conçu pour se développer verticalement afin de déplacer l'archet **208** par rapport au châssis **202** dans le but de maintenir l'archet **208** au contact de la caténaire. Ainsi, le bras articulé **210** est conçu pour, d'une part, se développer verticalement afin d'écarter l'archet **208** du châssis **202** lorsque la distance entre la caténaire **304** et le châssis **202** augmente et, d'autre part, se replier verticalement afin de rapprocher l'archet **208** du châssis **202** lorsque la distance entre la caténaire **304** et le châssis **202** diminue.

Dans l'exemple décrit, le bras articulé **210** est en deux parties et comporte une tige inférieure principale **214,** montée transversalement pivotante sur le châssis **202,** par exemple sur le cadre **204,** présentant un angle A1 avec la direction longitudinale, ainsi qu'une tige supérieure principale **216** montée transversalement pivotante sur la tige inférieure principale **214** et présentant un angle A2 avec la direction longitudinale. L'archet **208** est monté transversalement pivotant sur la tige supérieure principale **216.**

Le bras articulé **210** comporte en outre, de manière connue, une tige inférieure auxiliaire **218** montée transversalement pivotante sur le châssis **202** (par exemple, sur le cadre **204)** et sur la tige supérieure principale **216,** de manière à asservir l'angle A2 de la tige supérieure principale **216** à l'angle A1 de la tige inférieure principale **214,** de sorte que l'augmentation de l'angle A1 entraîne l'augmentation de l'angle A2.

Le bras articulé **210** comporte en outre, de manière connue, une tige supérieure auxiliaire non représentée, montée transversalement pivotante sur la tige inférieure principale **214** et sur l'archet **208,** de manière à ce que l'archet garde un angle sensiblement constant avec la direction longitudinale L quel que soit le développement du bras articulé **210.**

Le pantographe **308** comporte en outre un dispositif de rappel **222** conçu pour inciter le bras articulé **210** à se développer. Ainsi, l'archet **208** est maintenu au contact de la caténaire **304.** Le dispositif de rappel **222** comporte par exemple un coussin d'air, un ressort ou bien un moteur électrique. Par ailleurs, le pantographe **308** comporte un dispositif de déploiement **224** permettant de déployer ou de retirer le pantographe selon le besoin de service du véhicule ferroviaire.

L'archet **208** montré sur la figure 2 est un archet dit double, dans la mesure où il porte à son sommet deux bandes de frottement conformes à l'invention **1** et **1'.** Ces bandes de frottement, qui seront décrites plus en détail dans ce qui suit, se trouvent en contact mécanique frottant avec la caténaire **304** lorsque le pantographe **308** est déployé ; elles assurent ainsi un contact électrique dynamique entre la caténaire **304** et le pantographe **308.**

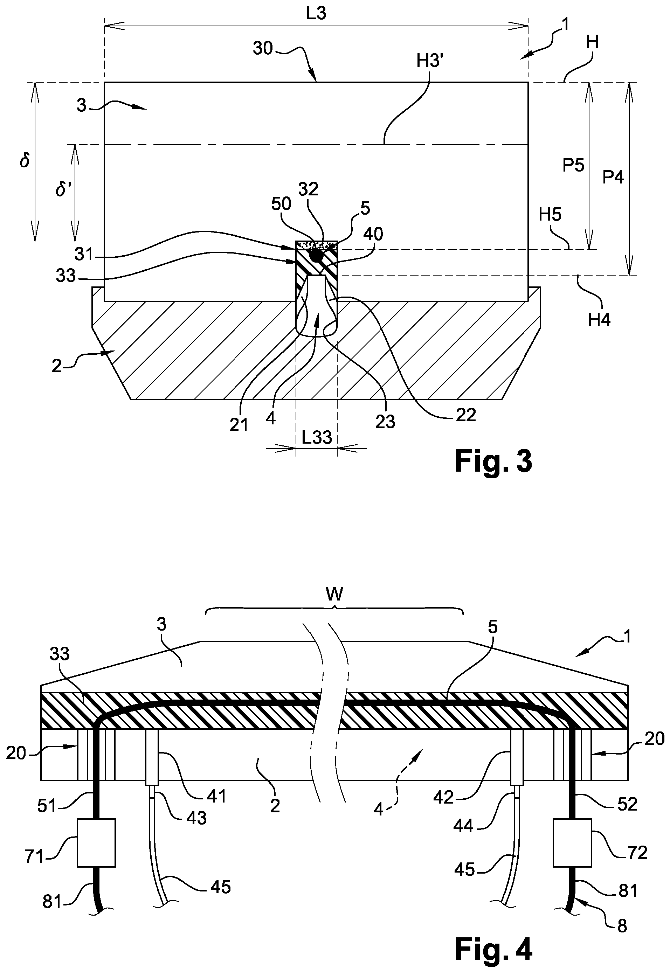

La présente invention concerne plus particulièrement chaque bande de frottement **1 et 1'** montée sur l'archet. La structure de la première bande de frottement **1** conforme à l'invention va maintenant être expliquée en grand détail en relation avec les figures 3 à 5, étant entendu que la structure de l'autre bande **1'** est identique.

De façon connue en soi, la bande de frottement **1** comprend tout d'abord un support métallique **2,** encore appelé « étrier », qui forme une embase de fixation. Typiquement, cet étrier est un profilé extrudé en aluminium ou alliage d'aluminium. De façon connue en soi, le support **2** est pourvu de deux rebords longitudinaux **21** et **22,** visibles notamment en figure 3. Ces rebords délimitent une cavité **23,** globalement en forme de U, laquelle est ouverte vers le haut.

Sur cet étrier **2** est fixée une bande d'usure **3** réalisée en un premier matériau électriquement conducteur et plus mou que le fil de la caténaire **304.** Typiquement, la bande de frottement **3** est réalisée en matériau carboné. Elle constitue la zone active pour le transfert d'énergie électrique de la caténaire **304** vers l'archet et le pantographe. De manière habituelle, cette bande d'usure peut être insérée longitudinalement à l'intérieur de l'étrier **2.** Cette bande d'usure **3** présente une zone centrale **W** d'épaisseur sensiblement constante qui représente sa zone principale d'usure. La hauteur initiale de la surface supérieure **30** de cette bande d'usure **3** est repérée par la ligne **H3** de la figure 3.

Cette bande d'usure **3** est creusée d'une gorge **31,** laquelle débouche sur la surface inférieure de cette bande **3.** Comme on le verra plus en détail dans ce qui suit, cette gorge permet la réception d'un élément conducteur allongé **5,** lequel est fixé contre la paroi supérieure de la gorge au moyen d'une couche **32** d'un adhésif approprié. Cette gorge permet en outre la réception d'un insert **33,** dit insert de maintien, dont la face inférieure assure la fermeture de la cavité **23.** De la sorte, cette face inférieure délimite, avec les parois de cette cavité, un conduit **4** dont les deux extrémités longitudinales **41** et **42** sont reliées à des buses de connexion respectives **43** et **44.** La surface supérieure **40** du conduit **4** est avantageusement disposée à une altitude constante notée **H4,** visible sur la figure 3.

De manière connue en soi ces buses **43** et **44** sont mises en communication avec un circuit pneumatique **45,** visible sur la figure 2. Ce circuit renferme un fluide, typiquement de l'air comprimé. Il est associé à un contrôleur pneumatique **46,** de manière à commander le dispositif **224** décrit ci-dessus, assurant le déploiement du pantographe. En cas d'usure au-delà d'une certaine valeur, ou en cas de rupture de la bande d'usure **3,** il y a perte d'étanchéité au niveau du conduit **4,** entraînant la fuite ou un changement de pression dudit fluide. Cette occurrence est détectée par le contrôleur **46,** lequel active le dispositif **224** de manière à déclencher la rétractation du pantographe. Le conduit 4 et le circuit de fluide **45** appartiennent à un système automatique d'abaissement d'urgence, connu sous le signe ADD, soit « Automatic Drop Device ». Les différentes fonctions, liées à ce système ADD, sont bien connues de sorte qu'elles ne seront pas décrites plus en détail.

Selon l'invention la bande d'usure **3** comprend, outre le conduit **4,** l'élément conducteur allongé **5** mentionné ci-dessus. Comme le montre la figure 4, le conduit **4** et l'élément **5** s'étendent de manière sensiblement parallèle, à savoir que leur différence de hauteurs est sensiblement constante. Cet élément conducteur est réalisé en un deuxième matériau électriquement conducteur, dont la conductivité électrique doit être supérieure à celle dudit premier matériau électriquement conducteur. Cet élément conducteur peut être un fil de cuivre. Sa surface supérieure **50** est avantageusement disposée à une altitude constante, notée **H5.**

Cet élément conducteur longitudinal **5** doit être électriquement isolé par rapport à la bande d'usure **3** et par rapport au support métallique (étrier) **2.** Dans le présent mode de réalisation cet élément conducteur **5,** qui est recouvert d'une enveloppe isolante non représentée, est noyé dans l'insert **33.** Ce dernier est réalisé en un matériau électriquement isolant, par exemple en silicone. Par conséquent cet insert contribue, en complément de l'enveloppe précitée, à la fonction d'isolation entre l'élément conducteur longitudinal **5** et la bande d'usure **3.** Cet insert assure une fonction supplémentaire de maintien, de manière à faciliter la manipulation lors de la fermeture du conduit **4** et la mise en place de l'élément conducteur longitudinal **5.**

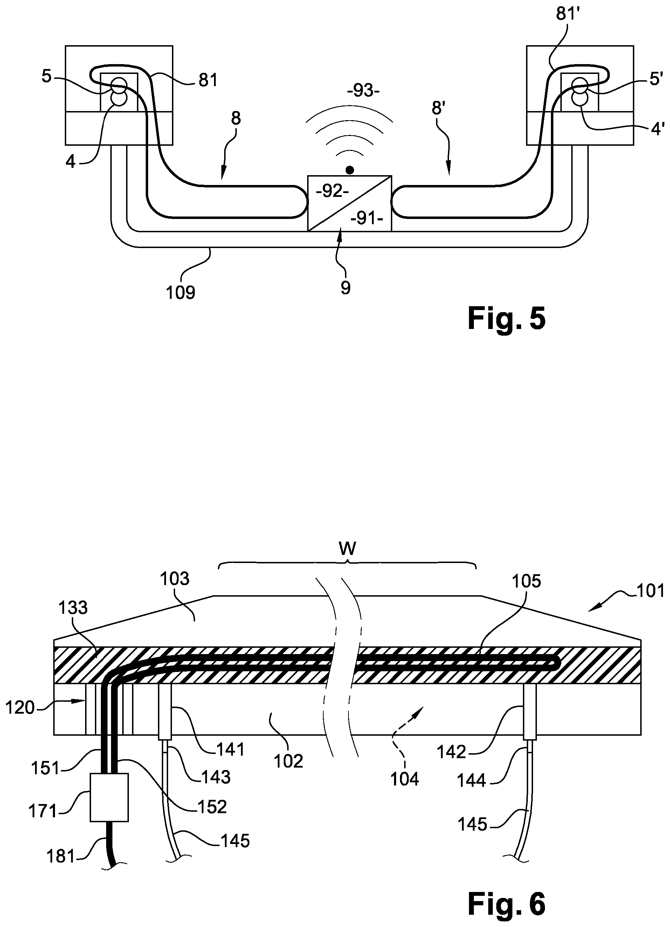

Ledit élément conducteur longitudinal **5** est relié à chacune de ses extrémités **51** et **52** à un connecteur respectif **71, 72.** Afin d'assurer l'isolation électrique entre ledit élément conducteur longitudinal **5** et le support métallique **2** on prévoit, au voisinage de chaque extrémité du connecteur, une gaine de protection **20** isolante qui sépare l'élément conducteur longitudinal **5** vis-à-vis du support métallique **2.** Chaque connecteur permet de relier l'élément **5** à un câblage dit de liaison **81,** s'étendant entre ces connecteurs, visible notamment en figure 5. Cet élément **5** forme, avec les deux connecteurs **71, 72** et le câblage **81,** un circuit dit de détection, désigné dans son ensemble par la référence **8.** Le branchement entre les deux extrémités du câblage **81** et les connecteurs **71** et **72,** illustré sur la figure 4, est avantageusement de type amovible.

Un module de contrôle/commande **9** est disposé au voisinage à la fois du câblage de liaison **81** du premier circuit de détection **8,** mais aussi du câblage de liaison **81'** du second circuit de détection associé à la deuxième bande **1'** (voir figure 5). Comme le montre cette figure, ce module **9** est fixé sur la tête **309** du pantographe **308,** par tout moyen approprié. Ce module **9** permet non seulement de détecter un dysfonctionnement au niveau de chaque circuit **8** ou **8',** mais également de fournir des informations relatives à ce dysfonctionnement en direction du véhicule ferroviaire et/ou du sol.

A cet effet ce module **9** est tout d'abord équipé de moyens de détection **91,** de type connu en soi, qui permettent d'identifier une variation d'un paramètre de fonctionnement du circuit **8** ou **8',** c'est à dire une coupure électrique au niveau de celui-ci. Par ailleurs ce module est muni de moyens d'alerte **92,** permettant de fournir des informations circonstanciées en direction du véhicule ferroviaire et/ou du sol. Ces moyens d'alerte sont avantageusement de type sans fil, ce qui est matérialisé par la référence **93.** Ces moyens d'alerte **92,** de nature classique, sont par exemple du type binaire (1=circuit fermé, 0=circuit ouvert). Dès que l'usure de la bande d'usure atteint le conducteur **5,** ce conducteur se coupe par frottement avec la caténaire et s'ouvre, changeant ainsi la résistance électrique du circuit.

On donne ci-dessous, à titre non limitatif, les valeurs numériques suivantes :
- diamètre du conducteur **5** : entre 1,0 mm (millimètre) et 1,5 mm ;
- différence d'altitudes entre la surface supérieure **30** de la bande **3,** à l'état non usé de celle-ci, et la surface supérieure **50** du conducteur **5** : typiquement de l'ordre de 20 mm. Cette différence d'altitudes, montrée sur la figure 3, est dénommée profondeur **P5** du conducteur;
- différence d'altitudes entre la surface supérieure **30** de la bande **3,** à l'état non usé de celle-ci, et la surface supérieure **40** du conduit **4,** au niveau de la face interne de ce conduit : typiquement de l'ordre de 25 mm. Cette différence d'altitudes, montrée sur la figure 3, est dénommée profondeur **P4** du conduit 4.
- différence de profondeur (P5-P4) entre les profondeurs respectives du conducteur **5** et du conduit **4** : typiquement de l'ordre de 5 mm.

Le contact frottant entre la caténaire **304** et la surface supérieure **30** de la bande d'usure **3** se fait à des endroits différents répartis sur la zone principale d'usure **W,** car le centrage de la caténaire **304** par rapport à la voie ferrée n'est pas constant. De ce fait l'usure de la zone principale d'usure **W est** assez uniforme. Au fur et à mesure que la caténaire entre en contact frottant avec la surface supérieure **30** de la bande d'usure **3,** cette dernière est soumise à une usure. Par conséquent, l'altitude de cette surface supérieure diminue, tout comme la distance **δ** entre cette surface supérieure **30** et la surface supérieure **50** de l'élément longitudinal **5.** A titre d'exemple, lorsque la surface **30** se situera à la hauteur **H3',** illustrée en traits mixtes sur la figure 3, la distance entre la surface supérieure **H3** de la bande et la surface supérieure de l'élément longitudinal **5** aura diminué de **δ** à **δ'.**

Lorsque la hauteur de la bande d'usure **3** diminue jusqu'au niveau de la surface supérieure de l'insert isolant **33,** le contact électrique entre la bande de frottement 1 et la caténaire **304** n'est pas interrompu car la largeur **L33** de cet insert isolant est faible par rapport à la largeur **L3** de la bande d'usure **3** (voir figure 3). La bande de frottement 1 peut donc continuer à remplir sa fonction de collecteur de courant entre la caténaire et le véhicule **300** pendant que l'usure de la bande d'usure **3** progresse, vers la base de l'insert isolant **33.**

Lorsque l'épaisseur de cet insert isolant **33** a été enlevée par frottement avec la caténaire, la caténaire vient user l'élément conducteur longitudinal **5** et l'élément conducteur longitudinal **5** finira par être sectionné. Selon l'invention, il est préféré de détecter le sectionnement de l'élément conducteur longitudinal **5** en surveillant la résistance électrique du circuit. Tant que le conducteur **5** n'est pas sectionné, la résistance du circuit lue par le module est basse, typiquement inférieure à 1 Ω. Dès que le conducteur **5** est sectionné, cette résistance deviendra très élevée, typiquement supérieure à 1 MΩ.

Nous décrivons maintenant un procédé de fabrication d'une bande de frottement **1** selon l'invention. On approvisionne le support métallique (étrier) **2,** l'élément conducteur longitudinal **5,** la bande d'usure **3,** les gaines de protection **20,** ainsi que l'insert **33.** On aménage la gorge **31** dans la bande d'usure **3** pour accueillir ce matériau électriquement isolant. De la sorte ce matériau permet tout d'abord de refermer le conduit **4** dans la partie supérieure de la cavité **23** du support **2,** tout en maintenant mécaniquement le conducteur **5** par rapport à la bande d'usure **3.**

Le matériau électriquement isolant, dont est constitué l'insert **33,** est typiquement réalisé en extrusion silicone. De manière connue en soi les extrémités longitudinales de la cavité **23** du support métallique **2** sont bouchées, afin d'éviter les fuites du circuit pneumatique. Puis on fixe la partie inférieure de la bande d'usure **3** dans le profilé **2** convenablement préformé, on pose les gaines de protection isolantes **20** et on fait sortir les extrémités dudit élément conducteur longitudinal **5** à travers lesdites gaines **20.**

Conformément à l'invention, l'usure de la bande de frottement **1** est détectée de la manière suivante. Lors de la mise en place d'une bande de frottement neuve, cette dernière est reconnue par le module, qui met à zéro le compteur temps. Puis, lorsque l'élément conducteur **5** ou **5'** est sectionné/usé par la caténaire, le module **9** détecte alors une réponse anormale du circuit **8** ou **8'** dont la résistance devient très élevée, voire infinie. Cette première information est alors transmise en direction du véhicule ferroviaire et/ou du sol. Par ailleurs, l'occurrence de cet évènement est affectée d'un premier temps caractéristique t1.

Le module **9** peut alors calculer la vitesse d'usure moyenne de la bande d'usure et ainsi, par extrapolation, générer une analyse prédictive de l'usure de la nouvelle bande. Il peut d'autre part calculer un deuxième temps caractéristique t2, correspondant à la mise en contact de la caténaire avec le conduit **4.** Cette valeur t2 est sensiblement égale à : t2 = (P4/P5) *t1, en supposant que la vitesse d'usure est constante. Le module estime alors une durée dite durée de sécurité (t2-t1), qui correspond à la durée de service restante avant que la bande **3** ne s'use jusqu'au conduit **4** et, par conséquent, ne déclenche l'ouverture du circuit pneumatique et la perte de disponibilité du pantographe.

Le module **9** transmet cette information à l'opérateur, qui peut alors planifier l'opération de maintenance de manière optimale. L'opérateur peut en effet prendre toutes les précautions nécessaires afin d'éviter le déclenchement du circuit pneumatique. En effet, comme on l'a vu ci-dessus, ce déclenchement s'accompagne nécessairement d'un retrait du bras du pantographe, ce qui impacte donc la disponibilité du véhicule ferroviaire.

Enfin, le module autonome **9** est capable d'envoyer régulièrement au véhicule ferroviaire et/ou au sol un message confirmant son bon état de fonctionnement. Toute avarie de fonctionnement du système de surveillance et, en particulier, de ce module 9 sera donc automatiquement détectée et communiquée aux personnes concernées.

Selon un mode de réalisation non représenté de l'invention, on peut prévoir de faire appel à au moins deux éléments conducteurs longitudinaux, situés à des profondeurs différentes. Dans ce cas, l'élément électriquement conducteur supérieur, à savoir tourné vers la surface supérieure **30,** permet de délivrer un premier degré d'alerte. Par ailleurs, l'invention prévoit alors au moins un autre élément électriquement conducteur, dit intermédiaire, interposé entre le conduit **4** et l'élément électriquement conducteur supérieur. Cela permet de fournir au moins un degré d'alerte supplémentaire, lequel s'ajoute au degré d'alerte délivré par le premier élément électriquement conducteur. Dans ce cas, chaque élément électriquement conducteur est muni de connecteurs respectifs, afin d'être relié à un circuit de détection respectif.

La figure 6 illustre une variante de la bande de frottement, conforme à l'invention. Sur cette figure 7, les éléments mécaniques analogues à ceux des figures 3 à 5 y sont affectés des mêmes numéros de référence, augmentés de 100. La bande de frottement **101** de cette figure 7 diffère essentiellement de celle **1** des figures 3 à 5, en ce qu'elle comprend un unique connecteur **171.** Par ailleurs, l'élément conducteur **105** forme une boucle, de sorte que ses deux extrémités **151** et **152** sont adjacentes et coopèrent avec le connecteur unique **171** précité.

Ce mode de réalisation de la figure 6 présente des avantages spécifiques, notamment de nature économique. En effet, il permet de réduire le nombre d'éléments constitutifs, puisqu'il fait appel à un unique connecteur **171** et, par conséquent, à une unique gaine **120.**

L'invention présente de nombreux avantages.

L'invention prévoit d'utiliser un élément électriquement conducteur, avec lequel la caténaire va interférer avant d'entrer en contact avec le conduit de détection pneumatique. L'invention permet donc d'éviter, dans une mesure importante, l'abaissement d'urgence du bras du pantographe. En effet, l'opérateur est averti, grâce à cet élément conducteur, d'un état d'usure « intermédiaire » de la bande de frottement. Dans ces conditions, il peut prendre toutes les précautions requises pour éviter l'occurrence d'un tel abaissement d'urgence. Par ailleurs, l'invention permet de fournir un niveau d'alerte, qui est non seulement précis mais aussi avantageusement modulable, grâce au positionnement de cet élément conducteur. En particulier, l'invention permet d'estimer la durée restante, avant le déclenchement du système automatique d'abaissement d'urgence, ou ADD.

L'invention est également avantageuse en termes économiques. En effet la bande de frottement de l'invention, formant un élément consommable, présente un prix de revient comparable à celui d'une bande classique. Par ailleurs, le dispositif de surveillance équipant un véhicule ferroviaire selon l'invention fait intervenir un faible nombre d'éléments mécaniques. Cette bande de frottement et ce véhicule ferroviaire, tous deux conformes à l'invention, présentent par conséquent des structures proches de l'état de la technique, tout en autorisant des fonctionnalités supplémentaires. Cette solution améliore donc la disponibilité du pantographe et la durée d'utilisation de la bande d'usure, sans faire de compromis sur la sécurité qui est toujours assurée par le système ADD classique.

À cet égard, on notera qu'il est particulièrement commode d'équiper des véhicules ferroviaires déjà en service, au moyen de la bande de frottement conforme à l'invention. On rappellera qu'une bande de frottement classique est équipée uniquement d'un conduit, destiné à être relié au circuit pneumatique de détection. En faisant référence notamment à la figure 5, on suppose désormais que cette bande classique doit être remplacée par une bande 1 conforme à l'invention. On dispose alors cette bande **1** à l'emplacement primitivement occupé par la bande classique, puis on raccorde le conduit **4** au circuit pneumatique déjà existant. Ensuite on installe le circuit électrique de détection **8,** que l'on branche aux connecteurs **71** et **72,** ainsi que le module **9** de contrôle/commande.

Le fait de prévoir un module de contrôle/commande, apte à transmettre des informations en mode « sans fil », présente des avantages spécifiques. Cela permet en effet d'éviter de relayer ce module, en mode filaire, à l'électronique du véhicule ferroviaire. Cette solution est à comparer, d'une part, avec une connexion au moyen d'un fil conducteur, qui serait incompatible avec la différence de potentiels. Elle est à comparer, d'autre part, avec une connexion par fibre optique, qui est relativement coûteuse et difficile à mettre en place.

Enfin, l'invention autorise une surveillance de l'ensemble de la largeur de la bande d'usure. En effet, elle ne fait pas appel à des capteurs discrets, localisés de manière ponctuelle sur cette bande d'usure.

La présente invention n'est pas limitée au mode de réalisation décrit précédemment, mais est au contraire définie par les revendications qui suivent. Il sera en effet apparent à l'homme du métier que des modifications peuvent y être apportées. Par exemple, on peut prévoir de réaliser le conduit de circulation pneumatique sous forme d'un tube, noyé dans l'insert. Néanmoins le mode de réalisation des figures 3 à 5 est préféré, en particulier car il est plus économique.

Par ailleurs, les termes utilisés dans les revendications ne doivent pas être compris comme limités aux éléments du mode de réalisation décrit précédemment, mais doivent au contraire être compris comme couvrant tous les éléments équivalents que l'homme du métier peut déduire à partir de ses connaissances générales.

## Revendications

1. Bande de frottement (1) pour un pantographe (308) d'un véhicule (300), notamment d'un véhicule ferroviaire, ladite bande de frottement comprenant des moyens de fixation sur ledit pantographe, notamment un étrier (2), ainsi qu'une bande d'usure (3) destinée à entrer en contact avec une caténaire (304), cette bande d'usure étant réalisée un premier matériau électriquement conducteur, ladite bande de frottement comprenant en outre un conduit (4), dit de détection pneumatique, adapté pour contenir un fluide sous pression, et des moyens de liaison (43, 44) aptes à relier ce conduit de détection pneumatique à un circuit de détection pneumatique (45),
**caractérisée en ce que** ladite bande de frottement (1) comprend en outre
- au moins un élément électriquement conducteur (5), dit de détection électrique, réalisé en un deuxième matériau électriquement conducteur dont la conductivité électrique est supérieure à celle dudit premier matériau électriquement conducteur, cet élément électriquement conducteur (5) étant interposé entre ledit conduit et la surface supérieure (30) de la bande d'usure (3),
- des moyens de connexion (71, 72) dudit élément électriquement conducteur (5) à un circuit de détection électrique (8), intégrant ledit élément électriquement conducteur.

2. Bande de frottement selon la revendication 1, **caractérisée en ce que** la surface supérieure (50) dudit élément électriquement conducteur (5) est située à une profondeur (P5) prédéterminée, par rapport à la surface supérieure (30) de ladite bande d'usure (3), à l'état non usé de cette dernière, cette profondeur étant notamment voisine de 20 millimètres, et **en ce que**, à l'état non usé de ladite bande d'usure (3), la différence entre la profondeur (P5) de la surface supérieure (50) dudit élément électriquement conducteur (5) et la profondeur (P4) de la surface supérieure (40) dudit conduit (4) est voisine de 5 millimètres.

3. Bande de frottement selon l'une quelconque des revendications précédentes, **caractérisée en ce que** ledit élément électriquement conducteur est allongé et s'étend transversalement à l'intérieur de la bande d'usure, en référence à la direction d'avancée du véhicule, ledit élément électriquement conducteur et ledit conduit étant de préférence mutuellement parallèles.

4. Bande de frottement selon l'une quelconque des revendications 1 à 3, **caractérisée en ce qu'**elle comprend en outre des moyens (33) d'isolation électrique, permettant d'isoler ledit élément électriquement conducteur (5) par rapport à la bande d'usure (3).

5. Bande de frottement selon l'une quelconque des revendications précédentes, **caractérisée en ce que** ledit au moins un élément électriquement conducteur est fixé, notamment par collage, contre le fond d'une gorge de la bande d'usure.

6. Bande de frottement selon l'une quelconque des revendications précédentes, **caractérisée en ce que** le support délimite une cavité ouverte vers le haut, et il est en outre prévu un insert, logé dans une gorge de la bande d'usure, ledit insert obturant l'ouverture de ladite cavité de manière à former ledit conduit,
et en option ledit insert maintient avantageusement en position ledit au moins un élément électriquement conducteur contre le fond de ladite gorge, et/ou ledit insert est avantageusement réalisé en un matériau isolant électrique, notamment en silicone,
et/ou ladite bande de frottement comprend les caractéristiques de la revendication 4 et les moyens d'isolation électrique comprennent une enveloppe isolante dudit élément électriquement conducteur.

7. Bande de frottement selon l'une des revendications précédentes, **caractérisée en ce que** les moyens de connexion sont des moyens de connexion amovible, aptes à être branchés de manière amovible à un câblage de liaison (81) dudit circuit de détection électrique (8).

8. Bande de frottement selon la revendication précédente, **caractérisée en ce que** les moyens de connexion amovible comprennent deux connecteurs électriques, prévus aux deux extrémités longitudinales opposées dudit élément électriquement conducteur.

9. Bande de frottement selon la revendication 7, **caractérisée en ce que** les moyens de connexion amovible comprennent un unique connecteur électrique, ledit élément électriquement conducteur formant une boucle dont les deux extrémités coopèrent avec ledit connecteur électrique unique.

10. Bande de frottement selon l'une quelconque des revendications précédentes, **caractérisée en ce que** la bande comporte au moins deux éléments électriquement conducteurs, un premier élément électriquement conducteur étant tourné vers la caténaire en fonctionnement normal du véhicule de manière à fournir un premier degré d'alerte, alors qu'au moins un autre élément électriquement conducteur est interposé entre ledit premier élément électriquement conducteur et ledit conduit, de manière à fournir au moins un autre degré d'alerte.

11. Véhicule ferroviaire (300) comprenant une caisse (306) et un pantographe (308), ledit pantographe comportant un châssis monté sur ladite caisse dudit véhicule, une bande de frottement (1, 1') destinée à entrer en contact avec une caténaire et des moyens de liaison entre le châssis et la bande de frottement,
**caractérisé en ce que** la bande de frottement est conforme à l'une quelconque des revendications précédentes, et le véhicule comprend en outre
- un circuit de détection pneumatique (45) intégrant ledit conduit de détection (4), ainsi que des moyens d'identification (46), propres à identifier une variation de pression dans ledit circuit pneumatique,
- au moins un circuit de détection électrique (8, 8') intégrant ledit au moins un élément électriquement conducteur (5), ainsi que des moyens de détection (91), propres à détecter la variation d'un paramètre représentatif dudit circuit de détection, tel que la coupure électrique dudit circuit de détection, et
- des moyens d'alerte (92) aptes à être activés lorsque ladite variation se situe en dehors d'une plage prédéterminée de réponses, notamment en cas de coupure électrique dudit circuit de détection.

12. Véhicule selon la revendication précédente, **caractérisé en ce qu'**il comprend en outre un module de contrôle/commande (9) intégrant les moyens de détection et les moyens d'alerte, ce module étant apte à coopérer avec ledit circuit de détection électrique (8, 8').

13. Véhicule selon la revendication 12, **caractérisé en ce que** ledit module de contrôle/commande (9) comprend des moyens de communication de type sans fil (93), propres à transmettre des informations en direction dudit véhicule ferroviaire et/ou du sol, ledit module de contrôle/commande (9) étant avantageusement fixé, notamment de manière amovible, sur la tête (109) du pantographe.

14. Procédé de surveillance de l'usure d'une bande de frottement selon l'une des revendications 1 à 10, montée sur un véhicule selon l'une des revendications 11 à 13, dans lequel :
- on détecte la variation d'un paramètre représentatif dudit circuit électrique de détection (8), tel que la coupure électrique dudit circuit de détection ;
- on en déduit la mise en contact de l'élément électriquement conducteur (5) avec la caténaire (304)
et dans lequel
- on détermine un premier temps caractéristique (t1), correspondant à la mise en contact de l'élément électriquement conducteur avec la caténaire
- on estime un second temps caractéristique (t2), correspondant à la mise en contact du conduit avec la caténaire
- on estime une durée de service dite de sécurité, correspondant à la différence (t2-t1) entre le second temps caractéristique et le premier temps caractéristique.

15. Procédé d'amélioration d'un véhicule ferroviaire (300) comprenant une caisse (306) et un pantographe (308),
ledit pantographe comportant un châssis monté sur ladite caisse dudit véhicule, au moins une bande de frottement dite originelle, destinée à entrer en contact avec une caténaire et des moyens de liaison entre le châssis et la bande de frottement,
ladite bande de frottement comprenant des moyens de fixation sur ledit pantographe, notamment un étrier, ainsi qu'une bande d'usure destinée à entrer en contact avec une caténaire (304) cette bande d'usure étant réalisée un premier matériau électriquement conducteur, ladite bande de frottement comprenant en outre un conduit, dit de détection pneumatique, adapté pour contenir un fluide sous pression, et des moyens de liaison aptes à relier ce conduit de détection pneumatique à un circuit de détection pneumatique,
**caractérisé en ce que**
- on remplace ladite au moins une bande de frottement originelle par une bande de frottement (1, 1') conforme à l'une quelconque des revendications 1 à 10, dite, dans ce qui suit, bande de frottement de remplacement
- on équipe ledit véhicule avec au moins un circuit de détection électrique (8) et avec des moyens de détection (9), propres à détecter la variation d'un paramètre représentatif dudit circuit de détection, tel que la coupure électrique dudit circuit de détection,
- on connecte ledit au moins un élément électriquement conducteur (5) de ladite bande de frottement de remplacement avec ledit circuit de détection électrique (8).

## Patentansprüche

1. Kontaktleiste (1) für einen Stromabnehmer (308) eines Fahrzeugs (300), insbesondere eines Schienenfahrzeugs, wobei die Kontaktleiste Mittel zur Befestigung am Stromabnehmer, insbesondere eine Halterung (2), sowie einen Verschleißstreifen (3) zur Berührung mit einer Oberleitung (304) umfasst, wobei dieser Verschleißstreifen aus einem ersten elektrisch leitfähigen Material besteht, und wobei diese Kontaktleiste ferner eine Leitung (4) umfasst, die als pneumatische Detektionsleitung bezeichnet wird und zur Aufnahme einer unter Druck stehenden Flüssigkeit geeignet ist, sowie Verbindungsmittel (43, 44), die geeignet sind, diese pneumatische Detektionsleitung mit einem pneumatischen Detektionskreis (45) zu verbinden,
**dadurch gekennzeichnet, dass** die Kontaktleiste (1) ferner umfasst
- mindestens ein elektrisch leitfähiges Element (5), ein sogenanntes elektrisches Detektionselement, das aus einem zweiten elektrisch leitfähigen Material besteht, dessen elektrische Leitfähigkeit größer ist als die des ersten elektrisch leitfähigen Materials, wobei dieses elektrisch leitfähige Element (5) zwischen dieser Leitung und der Oberseite (30) des Verschleißstreifens (3) angeordnet ist,
- Mittel zum Verbinden (71, 72) dieses elektrisch leitfähigen Elements (5) mit einem elektrischen Detektionskreis (8), der dieses elektrisch leitfähige Element enthält.

2. Kontaktleiste nach Anspruch 1, **dadurch gekennzeichnet, dass** die Oberseite (50) dieses elektrisch leitfähigen Elements (5) sich in einer vorbestimmten Tiefe (P5) relativ zur Oberseite (30) des Verschleißstreifens (3) im unverschleißten Zustand des letzteren befindet, wobei diese Tiefe insbesondere nahe bei 20 Millimetern liegt, und dadruch gekennzeichnet, dass im unverschleißten Zustand des Verschleißstreifens (3) der Unterschied zwischen der Tiefe (P5) der Oberseite (50) des elektrisch leitfähigen Elements (5) und der Tiefe (P4) der Oberseite (40) der Leitung (4) nahe bei 5 Millimetern liegt.

3. Kontaktleiste nach einem der vorhergehenden Ansprüche, **dadurch gekennzeichnet, dass** das elektrisch leitfähige Element länglich ist und sich quer in Richtung der Fahrtrichtung des Fahrzeugs innerhalb der Kontaktleiste erstreckt, wobei das elektrisch leitfähige Element und die Leitung vorzugsweise parallel zueinander verlaufen.

4. Kontaktleiste nach einem der Ansprüche 1 bis 3, **dadurch gekennzeichnet, dass** sie ferner Mittel (33) zur elektrischen Isolierung aufweist, die es ermöglichen, das elektrisch leitfähige Element (5) vom Verschleißstreifen (3) zu isolieren.

5. Kontaktleiste nach einem der vorhergehenden Ansprüche, **dadurch gekennzeichnet, dass** das mindestens eine elektrisch leitfähige Element insbesondere durch Kleben am Boden einer Nut im Verschleißstreifen befestigt ist.

6. Kontaktleiste nach einem der vorhergehenden Ansprüche, **dadurch gekennzeichnet, dass** die Halterung einen nach oben offenen Hohlraum abgrenzt und ferner ein Einsatz vorgesehen ist, der in einer Nut des Verschleißstreifens untergebracht ist, wobei dieser Einsatz die Öffnung des Hohlraums verschließt und so die Leitung bildet,
und als Option dieser Einsatz vorteilhaft das mindestens eine elektrisch leitfähige Element am Boden der Nut in Position hält,
und/oder dieser Einsatz aus einem elektrisch isolierenden Material, insbesondere Silikon, besteht,
und/oder die Kontaktleiste die Merkmale von Anspruch 4 umfasst und die elektrische Isolationseinrichtung eine Isolierhülle des elektrisch leitfähigen Elements und/oder des Einsatzes umfasst.

7. Kontaktleiste nach einem der Ansprüche 1 bis 6, **dadurch gekennzeichnet, dass** es sich bei den Verbindungsmitteln um abnehmbare Verbindungsmittel handelt, die abnehmbar mit einem Verbindungskabel (81) des elektrischen Detektionskreises (8) verbunden werden können.

8. Kontaktleiste nach einem der vorhergehenden Ansprüche, **dadurch gekennzeichnet, dass** die abnehmbare Verbindungseinrichtung zwei elektrische Verbinder umfasst, die an den beiden gegenüberliegenden Längsenden des elektrisch leitfähigen Elements angeordnet sind.

9. Kontaktleiste nach Anspruche 7, **dadurch gekennzeichnet, dass** die abnehmbare Verbindungseinrichtung einen einzelnen elektrischen Verbinder umfasst, wobei das elektrisch leitfähige Element eine Schleife bildet, deren zwei Enden mit dem einzelnen elektrischen Verbinder zusammenwirken.

10. Kontaktleiste nach einem der vorhergehenden Ansprüche, **dadurch gekennzeichnet, dass** die Leiste mindestens zwei elektrisch leitfähige Elemente umfasst, wobei ein erstes elektrisch leitfähiges Element im normalen Betrieb des Fahrzeugs zur Oberleitung hin gerichtet ist, um eine erste Warnstufe zu erzeugen, während mindestens ein weiteres elektrisch leitfähiges Element zwischen dem ersten elektrisch leitfähigen Element und der Leitung angeordnet ist, um mindestens eine weitere Warnstufe zu erzeugen.

11. Schienenfahrzeug (300), das einen Wagenkasten (306) und einen Stromabnehmer (308) umfasst, wobei der Stromabnehmer einen am Wagenkasten montierten Rahmen, eine Kontaktleiste (1, 1') zur Berührung mit einer Oberleitung und eine Verbindung zwischen dem Rahmen und der Kontaktleiste umfasst,
**dadurch gekennzeichnet, dass** die Kontaktleiste einem der vorhergehenden Ansprüche entspricht, und das Fahrzeug ferner umfasst
- einen pneumatischen Detektionskreis (45) mit der genannten Detektionsleitung (4) sowie eine Identifikationseinrichtung (46), die geeignet ist, eine Druckänderung in dem pneumatischen Kreis zu erkennen,
- mindestens einen elektrische Detektionskreis (8, 8') mit dem mindestens einen elektrisch leitfähigen Element (5) sowie Detektionsmittel (91), die geeignet sind, die Änderung eines für den Detektionskreis repräsentativen Parameters, wie beispielsweise die elektrische Unterbrechung des Detektionskreises, zu erfassen,
- Warnmittel (92), die aktiviert werden können, wenn die genannte Abweichung außerhalb eines vorbestimmten Antwortbereichs liegt, insbesondere im Falle einer elektrischen Unterbrechung des Detektionskreises.

12. Fahrzeug nach dem vorhergehenden Anspruch, **dadurch gekennzeichnet, dass** es ferner ein Steuer-/Befehlsmodul (9) umfasst, das Detektions- und Warnmittel integriert, wobei dieses Modul mit dem elektrischen Detektionskreis (8, 8') zusammenwirken kann.

13. Fahrzeug nach Anspruch 12, **dadurch gekennzeichnet, dass** das Steuer-/Befehlsmodul (9) drahtlose Kommunikationsmittel (93) umfasst, die geeignet sind, Informationen an das Schienenfahrzeug und/oder den Boden zu übermitteln, wobei das Steuer-/Befehlsmodul (9) insbesondere abnehmbar am Kopf (109) des Stromabnehmers befestigt ist.

14. Verfahren zur Überwachung des Verschleißes eines Reibstreifens nach einem der Ansprüche 1 bis 10, der an einem Fahrzeug nach einem der Ansprüche 11 bis 13 angebracht ist, wobei:
- die Änderung eines Parameters erfasst wird, der für den genannten elektrischen Detektionskreis (8) repräsentativ ist, wie beispielsweise die elektrische Unterbrechung des Detektionskreises;
- man daraus schließt, dass das elektrisch leitfähige Element (5) mit der Oberleitung (304) in Kontakt steht, und wobei
- eine erste charakteristische Zeit (t1) ermittelt wird, die dem Kontakt des elektrisch leitfähigen Elements mit der Oberleitung entspricht,
- eine zweite charakteristische Zeit (t2) abgeschätzt wird, die dem Kontakt des Rohrs mit der Oberleitung entspricht,
- eine sogenannte Sicherheitsdienstdauer geschätzt wird, die der Differenz (t2-t1 ) zwischen der zweiten charakteristischen Zeit und der ersten charakteristischen Zeit entspricht.

15. Verfahren zur Verbesserung eines Schienenfahrzeugs (300), das eine Wagenkasten (306) und eine Stromabnehmer (308) umfasst,
wobei dieser Stromabnehmer ein auf dem Fahrzeugaufbau montiertes Fahrgestell, mindestens eine Kontaktleiste zur Berührung mit einer Oberleitung, die als ursprüngliche Kontakleiste bezeichnet, sowie eine Verbindung zwischen dem Fahrgestell und der Kontaktleiste umfasst,
wobei diese Kontakleiste Mittel zur Befestigung am Stromabnehmer umfasst, insbesondere eine Halterung, sowie eine Kontaktleiste zur Berührung mit einer Oberleitung (304), wobei diese Kontaktleiste aus einem ersten elektrisch leitfähigen Material besteht, und wobei diese Kontaktleiste ferner eine Leitung, die als pneumatische Detektionsleitung bezeichnet wird und zur Aufnahme einer unter Druck stehenden Flüssigkeit geeignet ist, sowie Verbindungsmittel, die geeignet sind, diese pneumatische Detektionsleitung mit einem pneumatischen Detektionskreis zu verbinden, umfasst,
**dadurch gekennzeichnet, dass**
- mindestens eine ursprüngliche Kontakleiste durch eine Kontaktleiste (1, 1') ersetzt wird, die einem der Ansprüche 1 bis 10 entspricht und im folgenden als Ersatzkontaktleiste bezeichnet wird,
- das Fahrzeug mit mindestens einem elektrischen Detektionskreis (8) und mit Detektionsmitteln (9) ausgestattet wird, die geeignet sind, die Änderung eines für den Detektionskreis repräsentativen Parameters, wie beispielsweise die elektrische Unterbrechung des Detektionskreises, zu erfassen,
- das besagte mindestens eine elektrisch leitfähige Element (5) der besagten Ersatzkontaktleiste mit dem besagten elektrischen Detektionskreis (8) verbunden wird.

## Claims

1. Contact strip (1) for a pantograph (308) of a vehicle (300), in particular of a railway vehicle, said contact strip comprising means for fixing to said pantograph, in particular a bracket (2), as well as a wear strip (3) intended to come into contact with a catenary (304), said wear strip being made of a first electrically conductive material, said contact strip further comprising a conduit (4), called a pneumatic detection conduit, adapted to contain a fluid under pressure, and connecting means (43, 44) suitable for connecting this pneumatic detection conduit to a pneumatic detection circuit (45),
**characterized in that** said contact strip (1) further comprises
- at least one electrically conductive element (5), called an electrical detection element, made of a second electrically conductive material whose electrical conductivity is greater than that of said first electrically conductive material, this electrically conductive element (5) being interposed between said conduit and the upper surface (30) of the wear strip (3),
- means of connecting (71, 72) said electrically conductive element (5) to an electrical detection circuit (8), incorporating said electrically conductive element.

2. Contact strip according to claim 1, **characterized in that** the upper surface (50) of said electrically conductive element (5) is located at a predetermined depth (P5) relative to the upper surface (30) of said wear strip (3) in the unworn state of the latter, this depth being in particular close to 20 millimeters, and **in that** in the unworn state of said wear strip (3), the difference between the depth (P5) of the upper surface (50) of said electrically conductive element (5) and the depth (P4) of the upper surface (40) of said conduit (4) is close to 5 millimeters.

3. Contact strip according to any one of the preceding claims, **characterized in that** said electrically conductive element is elongated and extends transversely inside the wear strip, with reference to the direction of travel of the vehicle, said electrically conductive element and said conduit preferably being mutually parallel.

4. Contact strip according to any one of claims 1 to 3, **characterized in that** it further comprises means (33) for electrical insulation, enabling said electrically conductive element (5) to be isolated from the wear strip (3).

5. Contact strip according to any one of the preceding claims, **characterized in that** said at least one electrically conductive element is fixed, in particular by bonding, against the bottom of a groove in the wear strip.

6. Contact strip according to any one of the preceding claims, **characterized in that** the bracket delimits a cavity open upwards, and there is further provided an insert, housed in a groove of the wear strip, said insert closing the opening of said cavity so as to form said conduit,
and optionnally said insert holds advantageously said at least one electrically conductive element in position against the bottom of said groove,
and/or said insert is advantageously made of an electrically insulating material, in particular silicone,
and/or said contact strip comprises the features of claim 4 and said electrical insulation means comprise a sheath insulating said electrically conductive element.

7. Contact strip according to any one of the preceding claims, **characterized in that** the connection means are removable connection means, capable of being removably connected to a linking cable (81) of said electrical detection circuit (8).

8. Contact strip according to the preceding claim, **characterized in that** the removable connection means comprise two electrical connectors, provided at the two opposite longitudinal ends of said electrically conductive element.

9. Contact strip according to claim 7, **characterized in that** the removable connection means comprise a single electrical connector, said electrically conductive element forming a loop whose two ends cooperate with said single electrical connector.

10. Contact strip according to any one of the preceding claims, **characterized in that** the strip comprises at least two electrically conductive elements, a first electrically conductive element being turned towards the catenary in normal operation of the vehicle so as to provide a first degree of warning, while at least one other electrically conductive element is interposed between said first electrically conductive element and said conduit, so as to provide at least one other degree of warning.

11. Railway vehicle (300) comprising a body (306) and a pantograph (308), said pantograph comprising a frame mounted on said body of said vehicle, a contact strip (1, 1') intended to
come into contact with a catenary and means of connection between the frame and the contact strip,
**characterized in that** the contact strip conforms to any one of the preceding claims, and the vehicle further comprises
- a pneumatic detection circuit (45) incorporating said detection conduit (4), as well as identification means (46) suitable for identifying a pressure variation in said pneumatic circuit,
- at least one electrical detection circuit (8, 8') incorporating said at least one electrically conductive element (5), as well as detection means (91), suitable for detecting the variation of a parameter representative of said detection circuit, such as the electrical interruption of said detection circuit, and
- warning means (92) capable of being activated when said variation is outside a predetermined range of responses, in particular in the event of an electrical interruption of said detection circuit.

12. Vehicle according to the preceding claim, **characterized in that** it further comprises a control/command module (9) integrating detection means and warning means, this module being capable of cooperating with said electrical detection circuit (8, 8').

13. Vehicle according to claim 12, **characterized in that** said control/command module (9) includes wireless communication means (93), suitable for transmitting information towards said railway vehicle and/or the ground, said control/command module (9) being fixed, in particular in a removable manner, on the head (109) of the pantograph.

14. Method for monitoring the wear of a contact strip according to any one of claims 1 to 10, mounted on a vehicle according to any one of claims 11 to 13, wherein:
- the variation of a parameter representative of said electrical detection circuit (8), such as the electrical interruption of said detection circuit, is detected;
- a contact of the electrically conductive element (5) with the catenary (304) is deduced ; and in which
- a first characteristic time (t1) is determined, corresponding to the contact of the electrically conductive element with the catenary,
- a second characteristic time (t2) is estimated, corresponding to the contact of the conduit with the catenary,
- a so-called safety service duration is estimated, corresponding to the difference (t2-t1) between the second characteristic time and the first characteristic time.

15. Method for improving a railway vehicle (300) comprising a body (306) and a pantograph (308),
said pantograph comprising a chassis mounted on said body of said vehicle, at least one contact strip called the original contact strip, intended to come into contact with a catenary and means of connection between the chassis and the contact strip,
said contact strip comprising means for fixing to said pantograph, in particular a bracket, as well as a wear strip intended to come into contact with a catenary (304), this wear strip being made of a first electrically conductive material, said contact strip further comprising a conduit, called a pneumatic detection conduit, adapted to contain a fluid under pressure, and connecting means suitable for linking this pneumatic detection conduit to a pneumatic detection circuit,
**characterized in that**
- said at least one original contact strip is replaced by a contact strip (1, 1') conforming to any one of claims 1 to 10, referred to hereafter as the replacement contact strip,
- said vehicle is equipped with at least one electrical detection circuit (8) and with detection means (9) suitable for detecting the variation of a parameter representative of said detection circuit, such as the electrical interruption of said detection circuit,
- said at least one electrically conductive element (5) of said replacement contact strip is connected with said electrical detection circuit (8).
